# EUROPEAN PATENT APPLICATION

(11) **EP 4 746 421 A1**
(43) Date of publication of application: **20.05.2026**
(21) Application number: 24838773.0
(22) Date of filing: 08.07.2024
(51) Int. Cl.: H04N 21/431

(54) **MEDIA CONTENT STREAM PROCESSING METHOD AND APPARATUS, AND DEVICE AND STORAGE MEDIUM**

(30) Priority: 10.07.2023 CN 202310841722
(71) Applicant: Beijing Zitiao Network Technology Co., Ltd., Beijing 100190 (CN)
(72) Inventor: LIU, Fujia, Beijing 100028 (CN); WANG, Ruifeng, Beijing 100028 (CN); XU, Ning, Beijing 100028 (CN)
(74) Representative: Grünecker Patent- und Rechtsanwälte PartG mbB
(86) International application number: PCT/CN2024/104234
(87) International publication number: WO 2025/011520

(57) **Abstract**

Disclosed in the embodiments of the present disclosure are a media content stream processing method and apparatus, and a device and a storage medium. The method comprises: in response to a preset interaction operation for a first preset interaction area, presenting a preset control in the first preset interaction area, wherein the first preset interaction area comprises a preset interaction area corresponding to target first media content in a first media content stream, and the preset interaction area is used for presenting and/or posting associated information of media content corresponding to the preset interaction area; and in response to a trigger operation for the preset control, presenting a second media content stream, wherein second media content in the second media content stream has a preset association relationship with the target first media content, and/or associated information of the second media content meets a first preset condition.

## Description

This application claims the priority and benefits of Chinese patent application No.202310841722.9 filed on July 10, 2023, the entire disclosure of which is incorporated hereby reference as a part of the present application.

### TECHNICAL FIELD

Embodiments of the present disclosure relate to a media content stream processing method and apparatus, a device and a storage medium.

### BACKGROUND

With the continuous development of internet technologies, a user can browse various kinds of multimedia content through the Internet, and different users can interact based on the media content.

### SUMMARY

Embodiments of the present disclosure provide a media content stream processing method, an apparatus, a storage medium and a device, which can optimize existing media content stream processing solutions.

In a first aspect, a media content stream processing method is provided by embodiments of the present disclosure. This method includes:
in response to a preset interaction operation for a first preset interaction region, displaying a preset control on the first preset interaction region, wherein the first preset interaction region includes a preset interaction region corresponding to a target first media content in a first media content stream, and the preset interaction region is configured to display and/or post associated information of media content corresponding to the preset interaction region; and
in response to a trigger operation for the preset control, displaying a second media content stream, wherein second media content in the second media content stream has a preset association relationship with the target first media content, and/or associated information of the second media content meets a first preset condition.

In a second aspect, a media content stream processing apparatus is also provided by embodiments of the present disclosure. This apparatus includes:
a preset control display module, configured to: in response to a preset interaction operation for a first preset interaction region, display a preset control on the first preset interaction region, wherein the first preset interaction region includes a preset interaction region corresponding to a target first media content in a first media content stream, and the preset interaction region is configured to display and/or post associated information of media content corresponding to the preset interaction region; and
a content stream display module, configured to: in response to a trigger operation for the preset control, display a second media content stream, wherein second media content in the second media content stream has a preset association relationship with the target first media content, and/or associated information of the second media content meets a first preset condition.

In a third aspect, an electronic device is also provided by embodiments of the present disclosure. This electronic device includes:
one or more processors; and
a memory for storing one or more programs; when the one or more programs are executed by the one or more processors, the one or more processors implement the media content stream processing method according to the embodiments of the present disclosure.

In a fourth aspect, a storage medium including a computer executable instruction is also provided by embodiments of the present disclosure. The computer executable instruction, when executed by a computer processor, is configured to perform the media content stream processing method of the embodiments of the present disclosure.

### BRIEF DESCRIPTION OF DRAWINGS

The above and other features, advantages and aspects of embodiments of the present disclosure will become more apparent by referring to the following detailed description when taken in conjunction with the accompanying drawings. Throughout the drawings, same or similar reference numerals indicate same or similar elements. It should be understood that the drawings are schematic, and the originals and elements are not necessarily drawn to scale.
Fig. 1 is a flow schematic diagram of a media content stream processing method provided by an embodiment of the present disclosure;
Fig. 2 is a schematic diagram of an interface interaction provided by an embodiment of the present disclosure;
Fig. 3 is a schematic diagram of another interface interaction provided by an embodiment of the present disclosure;
Fig. 4 is a flow schematic diagram of another media content stream processing method provided by an embodiment of the present disclosure;
Fig. 5 is a schematic diagram of another interface interaction provided by an embodiment of the present disclosure;
Fig. 6 is a structure schematic diagram of a media content stream processing apparatus provided by an embodiment of the present disclosure; and
Fig. 7 is a structure schematic diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be embodied in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "include", "comprise" and their variants are open-ended including, that is, "including but not limited to". The term "based on" is "at least partially based on". The term "one embodiment" means "at least one embodiment". The term "another embodiment" means "at least one other embodiment". The term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a", "an" and "a plurality of" mentioned in the present disclosure are schematic rather than limiting, and those skilled in the art should understand that unless the context clearly indicates otherwise, they should be understood as "one or more".

Names of messages or information exchanged among a plurality of apparatuses in the embodiments of the present disclosure are only used for illustrative purposes, and are not used to limit the scope of these messages or information.

It can be understood that before using the technical solutions disclosed in various embodiments of present disclosure, users should be informed of the types, scope of use, use scenarios, etc. of personal information involved in present disclosure in an appropriate way according to relevant laws and regulations and be authorized by users.

For example, in response to receiving the user's active request, prompt information is sent to a user to clearly remind the user that the requested operation will require obtaining and using the user's personal information. Therefore, the user can independently choose whether to provide personal information to software or hardware such as electronic devices, applications, servers or storage media that perform the operation of the technical solution of the present disclosure according to the prompt information.

As an optional but non-limiting implementation, in response to receiving the user's active request, the way to send the prompt information to the user can be, for example, a pop-up window, in which the prompt information can be presented in text. In addition, the pop-up window can also carry a selection control for the user to choose "agree" or "disagree" to provide personal information to the electronic device.

It can be understood that the above process of notifying and obtaining user authorization is only schematic, and does not limit the implementation of the present disclosure. Other ways to meet relevant laws and regulations can also be applied to the implementation of the present disclosure.

It can be understood that the data involved in this technical solution (including but not limited to the data itself, data acquisition or use) shall comply with the requirements of corresponding laws, regulations and relevant regulations.

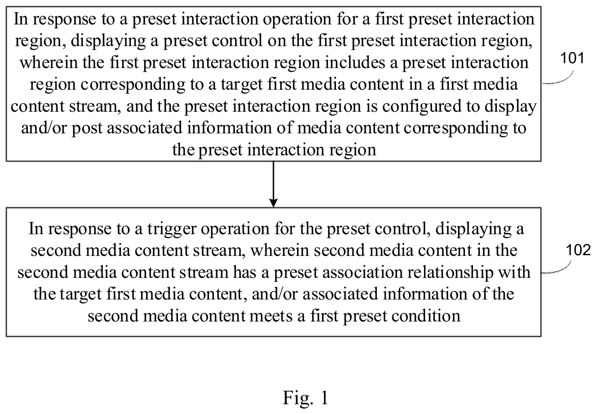

Fig. 1 is a flow schematic diagram of a media content stream processing method provided by an embodiment of the present disclosure. The embodiment of the present disclosure is applicable to the situation of media content stream processing, the method may be executed by a media content stream processing apparatus, and the apparatus may be implemented in the form of software and/or hardware. Optionally, it may be implemented by an electronic device, and the electronic device may be mobile terminals such as a mobile phone, a smart watch, a tablet computer, and a personal digital assistant, as well as a device such as a personal computer (PC) or a server.

As shown in Fig. 1, the method includes:
Step 101: in response to a preset interaction operation for a first preset interaction region, displaying a preset control on the first preset interaction region, wherein the first preset interaction region includes a preset interaction region corresponding to a target first media content in a first media content stream, and the preset interaction region is configured to display and/or post associated information of media content corresponding to the preset interaction region.

Exemplarily, the first media content stream may be displayed on a first content display interface, the first media content stream may be any media content stream, media content in the first media content stream is marked as first media content, and the target first media content may be any first media content. The media content may include image content, video content, or audio content or the like, and specifically includes image works, video works, music works, or live streaming content or the like.

Exemplarily, the associated information includes interaction information associated with the media content, and the specific association mode is not limited. For example, the association mode may be that users post comments on the media content, that is, the associated information may include comment information; for another example, the association mode may be that the users post comments on the comments of the media content, or it may be understood as comment information posted in response to the comments of the media content, that is, the associated information may include comment reply information; and for another example, the association mode may be that the users post likes on the media content, that is, the associated information may include like information.

Exemplarily, the preset interaction region is used to display and/or post associated information of corresponding media content, a current user may view the associated information of the media content posted by oneself or other users through the preset interaction region, and may also post the associated information of the media content through the preset interaction region. The preset interaction region corresponding to the target first media content is marked as the first preset interaction region.

Exemplarily, the preset interaction operation may include an associated information posting operation, such as posting comment information; the preset interaction operation may also include an interaction operation for the associated information, such as an operation of inputting likes for the comment information or a forwarding operation for the comment information. Optionally, the preset interaction operation may specifically include an interaction operation that meets a preset requirement for the associated information. The preset requirement may be determined based on the number of the interaction operation, for example, the number of the interaction operation reaches a preset number threshold, and specifically such as the number of the operation of inputting likes reaches the preset number threshold.

Exemplarily, the preset interaction operation for the first preset interaction region includes: an operation of posting associated information of the target first media content in the first preset interaction region, and/or an interaction operation, which meets a preset requirement, of inputting the associated information of the target first media content in the first preset interaction region. Therefore, when the user actively posts the associated information in the first preset interaction region or actively interacts for the associated information in the first preset interaction region, the display of a preset control may be triggered, and it is convenient for switching to display of the media content stream.

Exemplarily, a display position of the preset control in the first preset interaction region is not limited and may be a preset fixed position, such as a top region of the first preset interaction region or a bottom region of the first preset interaction region; and it may also be a dynamically determined position, the display position is different in different situations, such as it is determined according to a type of the preset interaction operation or whether associated information is present in the target first media content.

Step 102: in response to a trigger operation for the preset control, displaying a second media content stream, wherein second media content in the second media content stream has a preset association relationship with the target first media content, and/or associated information of the second media content meets a first preset condition.

Exemplarily, the trigger operation for the preset control may be, for example, a click operation or a touch-and-hold operation, and so on.

Exemplarily, the second media content stream may be displayed on a second content display interface, and the second content display interface and the first content display interface may be the same interface or different interfaces. When they are different interfaces, it may switch from displaying the first content display interface to displaying the second content display interface, and the second media content stream is displayed in the second content display interface. When the interfaces are the same, it may switch from displaying the first media stream to displaying the second media content stream on the first content display interface, and identification information of the second media content stream, such as "related recommendations", may be displayed in the interface.

Exemplarily, media content in the second media content stream is marked as the second media content. The second media content may have the preset association relationship with the target first media content. The preset association relationship is not specifically limited. For example, it may be determined based on the content similarity between the second media content and the target first media content. When the content similarity is greater than a preset similarity threshold, it may be considered that there is the preset association relationship; it may also be determined based on whether the second media content and the target first media content are posted by the same user, if so, it may be considered that there is the preset association relationship. It may also be determined based on a time difference between the posting time of the second media content and the posting time of the target first media content, and when the time difference is less than a preset time difference threshold, it may be considered that there is the preset association relationship.

Optionally, the second media content in the second media content stream having the preset association relationship with the target first media content, includes: the second media content in the second media content stream has an association relationship with associated information of the target first media content. Therefore, the second media content associated with the associated information of the target first media content may be displayed to the user. The association relationship may be specifically determined based on the content similarity between the second media content and the associated information of the target first media content. When the content similarity is greater than a preset similarity threshold, it may be considered that there is the association relationship. Optionally, the preset interaction operation may include an associated information posting operation, and the associated information of the target first media content may be specifically the associated information of the target first media content posted by the current user.

Exemplarily, the associated information of the second media content meets the first preset condition. The first preset condition is not specifically limited. Exemplarily, it may be determined based on the number of pieces of the associated information. For example, when the number of pieces of the associated information of the second media content is less than a first preset number threshold, then the first preset condition is met. Therefore, the second media content with the smaller number of pieces of the associated information can be displayed to the user, such as no associated information or single digit associated information, which is beneficial for improving the interaction efficiency and interaction frequency for this type of the second media content. For another example, when a difference between the number of pieces of the associated information of the second media content and the number of pieces of the associated information of the target first media content is less than a preset difference threshold, then the first preset condition is met. Therefore, the second media content with the number of pieces of the associated information similar to the target first media content may be displayed to the user, and the user's demand for interaction with the media content with the similar number of pieces of the associated information is met.

Optionally, the second media content has the preset association relationship with the target first media content, and the associated information of the second media content meets the first preset condition. For example, the content similarity between the second media content and the target first media content is greater than the preset similarity threshold, and the number of pieces of the associated information of the second media content is less than a preset number threshold.

Optionally, the target first media content may be the first media content that meets a certain condition, for example, the associated information of the target first media content meets a second preset condition, namely, in response to a preset interaction operation for a first preset interaction region, when the associated information of the target first media content meets the second preset condition, the preset control is displayed on the first preset interaction region. The second preset condition is not specifically limited. Exemplarily, it may be determined based on the number of pieces of the associated information. For example, when the number of pieces of the associated information of the target first media content is less than a second preset number threshold, then the second preset condition is met. Therefore, when the user inputs the preset interaction operation for the first media content with less associated information, the preset control may be displayed, and then it is convenient for the user to view more related media content. Optionally, the second preset number threshold may be associated with the first preset number threshold, for example, the second preset number threshold may be the same as the first preset number threshold, or a difference between the second preset number threshold and the first preset number threshold is less than a preset threshold. Therefore, when the user inputs the preset interaction operation for the first media content with the less associated information, the preset control may be displayed, and then it is convenient for the user to view more related media content with the less associated information.

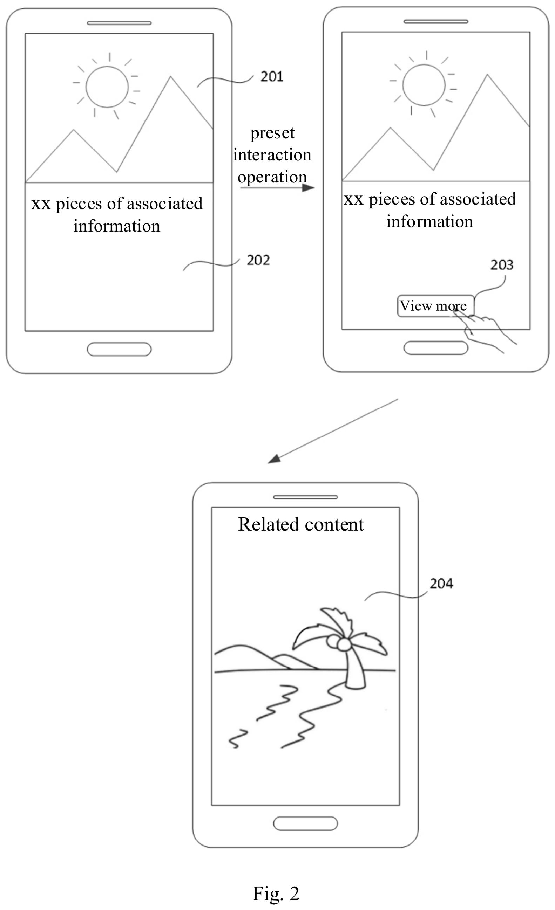

Fig. 2 is a schematic diagram of an interface interaction provided by an embodiment of the present disclosure. As shown in Fig. 2, after the user inputs a preset interaction operation for a first preset interaction region 202 of target first media content 201, a preset control 203 is displayed in the first preset interaction region 202, and after the user inputs a trigger operation for the preset control 203, the second media content stream is displayed, for example, the second media content 204 of the second media content stream is displayed. Exemplarily, the user may input a preset switching operation to switch to displaying different second media content, such as a sliding operation.

Based on the media content stream processing method in the embodiment of the present disclosure, after the user inputs the preset interaction operation for the preset interaction region corresponding to the target first media content in the first media content stream, the preset control is displayed, so that the user may conveniently switch to the display of the second media content stream in a mode of triggering the preset control, thereby facilitating the user to browse the second media content associated with the target first media content and/or the second media content whose associated information meets the preset condition. The interaction functions based on the media content are enriched, and the browsing effects of the media content are improved.

In some embodiments, the preset control is displayed at a target position in the first preset interaction region, and the target position is associated with the associated information in the first preset interaction region. Therefore, the display position of the preset control may be dynamically and flexibly determined based on the associated information in the first preset interaction region.

Exemplarily, in response to the associated information not being present in the first preset interaction region, the target position may be a preset position, such as a center position of the first preset interaction region; and in response to the associated information being present in the first preset interaction region, the target position may be an associated position of the display position of a first piece of the associated information in the first preset interaction region (such as a lower side or a right side), or an associated position of the display position of a last piece of the associated information in the first preset interaction region (such as a lower side or a right side). For example, in response to the target position being below the display position of the last piece of the associated information, when there is a larger number of pieces of the associated information, the user may not view the preset control because he/she has not browsed all the associated information. However, when there is a smaller number of pieces of the associated information, the user is easier to view the preset control, which makes it easier to switch to displaying the second media content stream when the number of pieces of the associated information of the target first media content is small, so as to view more related media content.

In some embodiments, in the process of displaying the second media content stream, it further includes: displaying a first associated information input control corresponding to the second media content in a first associated region of the second media content. Therefore, while displaying the second media content, the associated information input control is displayed, which is convenient for the user to quickly input the associated information, reduce the operation path of inputting associated information, and improve the operation efficiency.

Optionally, the first associated information input control includes an input box and/or at least one emoji control. Therefore, the input control that achieves a convenient input mode can be provided to the user. In response to a trigger operation for the input box, an input panel (such as including a keyboard and the input box) is displayed, so that the user can quickly input characters as the information content of the associated information to be posted; and in response to a trigger operation for a target emoji control, an emoji icon corresponding to the target emoji control is filled into the input box as the information content of the associated information to be posted. Optionally, after the emoji icon corresponding to the target emoji control is filled into the input box, the input panel is displayed, which is convenient for the user to post the associated information by triggering a posting control in the input panel.

In some embodiments, after the displaying a second media content stream, the method further includes: receiving target associated information inputted for current second media content; and in response to a posting operation of the target associated information, displaying preset prompt information when it is determined that the target associated information meets a third preset condition. Therefore, when the user posts the associated information for current second media content, the prompt information is displayed when a certain condition is met, so that the user can receive timely and intuitive feedback on the interaction of the associated information posted.

Exemplarily, the preset prompt information is associated with the third preset condition, which is convenient for the user to intuitively know that the associated information posted by oneself meets the third preset condition already, and the effect of posting the prompt information is improved. Optionally, the preset prompt information may be displayed in a second preset interaction region of the second media content.

In some embodiments, the target associated information meeting the third preset condition, includes: ordering of the target associated information in associated information of the second media content is a preset sequence number, wherein the preset prompt information is associated with the preset sequence number. Therefore, it is convenient for the user to view the ordering position of the association information posted by oneself in the association information posted already. The preset sequence number may be, for example, 1 or other sequence numbers. When the preset sequence number is 1, taking the comment information as an example, when the user posts the first comment information, prompt information of posting a first comment is displayed, and the display effect after the user posts the prompt information can be further improved.

In some embodiments, a second display style of the second media content stream is different from a first display style of the first media content stream. Therefore, the user can more intuitively know the switching of the media content streams.

In some embodiments, the second display style of the second media content stream includes at least one of the following: a media content single-page display style; a multi-column and/or multi-row media content display style; and a display style based on a card flow, wherein one card in the card flow corresponds to one piece of second media content, and the card includes an associated image display region of the corresponding second media content, and further includes at least one region selected from the group consisting of an associated character display region of the corresponding second media content, an associated control display region, and an associated information display region. Therefore, rich display styles of the second media content stream are provided, and the browsing effect of the second media content stream is improved.

Exemplarily, the media content single-page display style may be understood as that the display interface (such as the second content display interface described previously) supports the simultaneous display of a single piece of media content, such as the second media content 204 in Fig. 2.

Exemplarily, the multi-column and/or multi-row media content display style may be understood as that the display interface supports the simultaneous display of multiple pieces of media content, the multiple pieces of media content are sorted and displayed in the form of rows or columns, and multiple rows and/or multiple columns exist in the multiple pieces of media content. Each row and/or each column may display more than one piece of second media content simultaneously.

Exemplarily, the display style based on the card flow may be understood as a single column or single row display style, one column contains multiple cards or one row contains multiple cards, and each card corresponds to one piece of second media content. The associated image display region may display itself, cover, screenshot, or fragment or the like of the second media content. The associated character display region may display character content such as the title of the second media content; the associated control display region may display associated controls such as a like control, a comment control, and a forwarding control; and the associated information display region may display at least one piece of associated information.

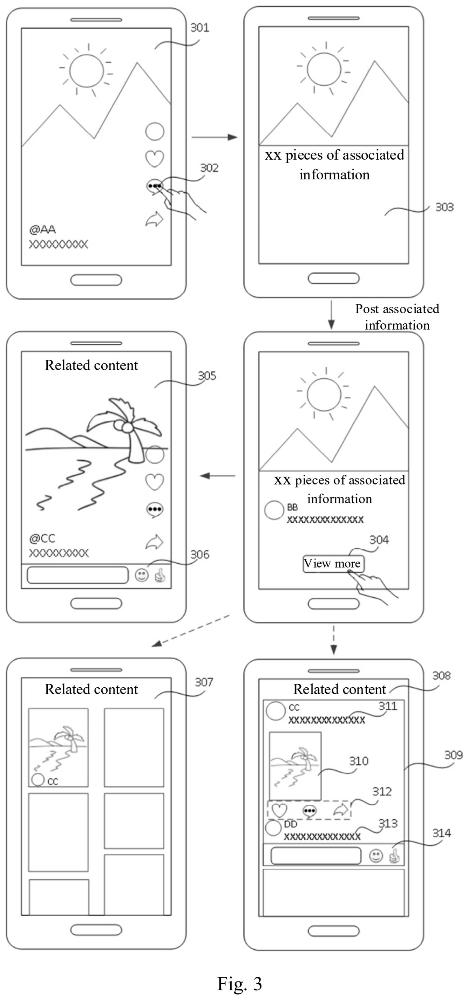

Fig. 3 is a schematic diagram of another interface interaction provided by an embodiment of the present disclosure. As shown in Fig. 3, a first media content stream 301 is displayed on a first content display interface, and a first display style of the first media content stream 301 is marked as a style A. Specifically, it may be a media content single-page display style, and different first media content may be switched to display by a sliding operation. After the user triggers a preset interaction control 302, a first preset interaction region 303 is displayed; after the user posts associated information by the first preset interaction region 303, a preset control 304 is displayed in the first preset interaction region 303; and after the user triggers the preset control 304, a second media content stream is displayed. Fig. 3 shows three different second display styles of the second media content streams, which are marked as a style B, a style C, and a style D respectively. The style B of the second media content stream 305 is a media content single-page display style. Compared with the first media content stream 301, it can be seen that in a first associated region of the second media content in the second media content stream 305 of the style B, a first associated information input control 306 corresponding to the second media content is displayed, so the style B is different from the style A. The style C of the second media content stream 307 is a double-column media content display style, and each column supports the simultaneous display of more than one piece of the second media content. It can be seen that the style C is different from the style A. The style D of the second media content stream 308 is a display style based on a card flow, and the interface supports the simultaneous display of more than one card, as shown in the figure, a card 309 may include an associated image display region 310 of the second media content, an associated character display region 311 of the second media content, an associated control display region 312, and an associated information display region 313, and also include a first associated information input control 314 in the style D. It can be seen that the style D is different from the style A.

In some embodiments, in response to the second display style of the second media content stream including the multi-column and/or multi-row media content display style or the display style based on the card stream, after displaying the second media content stream, the method further includes: in response to a trigger operation for target second media content, displaying the target second media content by using the media content single-page display style. Further, after the displaying the target second media content by using the media content single-page display style, the method may further include: in a second associated region of the target second media content, displaying a second associated information input control corresponding to the target second media content. Therefore, for the multi-column and/or multi-row media content display style, or the display style based on the card flow, it can support the user to switch to the media content single-page display style by triggering the specific second media content for display. It may be understood as entering a detail page of the second media content, and the display region is larger, so that the detail content of the second media content can be better viewed. Further, the second associated information input control can also be provided, and it is convenient for the user to quickly post the associated information.

Optionally, the second associated information input control includes an input box and/or at least one emoji control. The second associated information input control and the first associated information input control may be different, for example, the control sizes are different, or the control styles are different.

In some embodiments, a second display style of the second media content stream includes at least two types; and the in response to the trigger operation for the preset control, displaying a second media content stream, includes: in response to the trigger operation for the preset control, determining a target second display style based on a target determination mode, and displaying the second media content stream by using the target second display style. Therefore, the display style of the second media content stream can be dynamically determined, and the browsing effect of the media content is further improved.

Optionally, the target determination mode is associated with a current user and/or the second media content. Therefore, the display style of the second media content stream may be more reasonably and accurately determined. Exemplarily, the association with the current user may specifically be associated with a setting operation of the current user, such as the user may preset the display style of the second media content stream according to self-requirements; the association with the second media content may specifically be associated with a richness degree of the second media content, for example, when the number of media types corresponding to the second media content is greater than a first type number threshold, and/or the number of content types corresponding to the second media content is greater than a second type number threshold, the multi-column and/or multi-row media content display style may be selected; for another example, when the number of the media types corresponding to the second media content is less than a first type number threshold, and/or the number of the content types corresponding to the second media content is less than a second type number threshold, the media content single-page display style or the display style based on the card flow may be selected. The media types may include pictures, videos, audios, or live streaming or the like; and the classification mode of the content types is not limited, for example, it may include scenic categories, explanatory categories, or collaborative categories.

In some embodiments, the second media content in the second media content stream having the preset association relationship with the target first media content, includes: the second media content in the second media content stream corresponds to a same target theme as the target first media content. Therefore, the related media content may be pushed to the user more accurately.

Exemplarily, the theme may be specifically a topic, the corresponding topic may be determined according to a topic label carried by the media content, and the topic corresponding to a certain media content may also be determined according to other modes, it is not specifically limited. Exemplarily, when the second media content stream is displayed, a theme label corresponding to the target theme may be displayed, so that the user can intuitively know the theme corresponding to the currently browsed second media content.

In some embodiments, the preset control contains indication information of the target theme. Therefore, the user may know the theme corresponding to the second media content stream to be displayed in advance, and it is convenient for the user to quickly determine whether to trigger the preset control.

Optionally, the preset control may have at least two styles. When the target theme corresponding to the target first media content is determined, the preset control contains indication information of the target theme, such as "Go to xx topic to view more content"; and when the theme corresponding to the target first media content may not be determined, the preset control may include preset information, such as "View more".

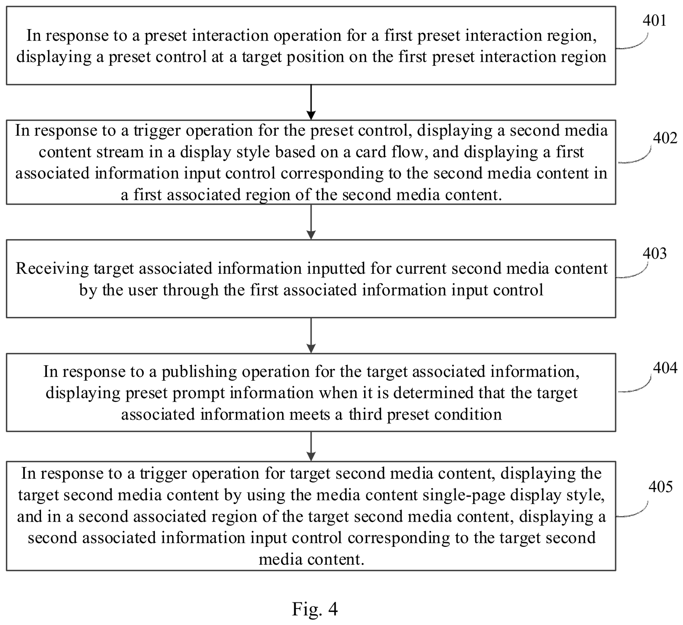

Fig. 4 is a flow schematic diagram of another media content stream processing method provided by an embodiment of the present disclosure, and the embodiment of the present disclosure is optimized based on various optional solutions in the above embodiments. Specifically, the method includes the following steps:
Step 401: in response to a preset interaction operation for a first preset interaction region, displaying a preset control at a target position on the first preset interaction region.

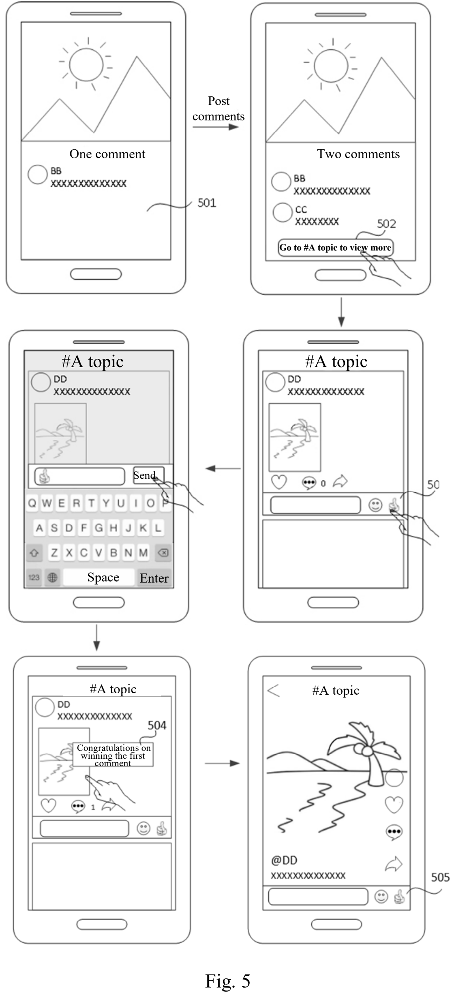

Fig. 5 is a schematic diagram of another interface interaction provided by an embodiment of the present disclosure. Exemplarily, the associated information as comment information is taken as an example, the first preset interaction region is a first comment region 501 corresponding to a target first video in a first video stream, the first comment region 501 currently includes one piece of comment information, and the preset interaction operation includes posting the comment information in the first comment region 501. When it is determined that the target first video corresponds to a topic A, a preset control 502 may be displayed below the last piece of comment information in the first comment region 501, and the preset control 502 includes indication information of the topic A, such as "Go to #A topic to view more".

Step 402: in response to a trigger operation for the preset control, displaying a second media content stream in a display style based on a card flow, and displaying a first associated information input control corresponding to the second media content in a first associated region of the second media content.

The second media content in the second media content stream has a preset association relationship with the target first media content, and associated information of the second media content meets a first preset condition.

Exemplarily, a second video in a second video stream corresponds to the same target topic as the first target video, such as the above topic A, and the number of pieces of the comment information in the second video is less than a first preset number threshold, such as less than 5. As shown in Fig. 5, the second video displayed corresponds to the topic A, and the number of pieces of the comment information is 0.

Optionally, more screening conditions for the second media content may also be set, for example, a time difference between the current time and the posting time of the second media content is less than a target time difference threshold. For example, the second video is a video posted within the last 10 days. For another example, a posting rate of the associated information of the second media content is higher than a preset posting rate threshold, and the posting rate may be understood as the quotient of the number of pieces of the associated information of the media content and the display number of times of the media content (it may be the display number of times from the posting time to the current time). For example, the quotient of the number of pieces of the comment information of the second video and the display number of times of the second video is greater than the preset posting rate threshold.

As shown in Fig. 5, after the user clicks on the preset control 502, the second video stream is displayed in the display style based on the card flow, and in the first associated region of the second video, a first comment input control 503 corresponding to the second video is displayed. The first comment input control 503 includes an input box and two emoji controls, which is convenient for the user to quickly input the comment information.

Step 403: receiving target associated information inputted for current second media content by the user through the first associated information input control.

As shown in Fig. 5, the user clicks on the like-emoji control, an input panel is popped up, and a like-emoji icon is filled into the input box in the input panel.

Step 404: in response to a posting operation for the target associated information, displaying preset prompt information when it is determined that the target associated information meets a third preset condition.

As shown in Fig. 5, the user clicks on a sending control, to post the target comment information. The target comment information is sorted first in the comment information of the current second video, and preset prompt information 504 may be displayed, such as "Congratulations on winning the first comment".

Step 405: in response to a trigger operation for target second media content, displaying the target second media content by using the media content single-page display style, and in a second associated region of the target second media content, displaying a second associated information input control corresponding to the target second media content.

Exemplarily, as shown in Fig. 5, when the user clicks on the associated image display region in the card, it may enter a detail interface of the target second video, and in the second associated region of the target second video, a second comment input control 505 corresponding to the target second video is displayed, which is convenient for the user to quickly input the comment information.

It should be noted that in the process of displaying the second media stream in the display style based on the card flow, the user may browse more second media content in the second media content stream by inputting operations such as sliding up, and it may enter the detail interface of the target second media content by inputting the trigger operation for any target second media content (including those with the posted comment information and those without the posted comment information).

Exemplarily, the user can switch the second media content in the second media content stream by inputting a switching operation such as the sliding operation under the media content single page display style. For example, in the last interface diagram shown in Fig. 5, the user may switch to displaying the next second media content, namely the next second video, in the media content single-page display style by inputting the sliding up operation.

Optionally, the user may switch back to the display style based on the card flow by inputting and clicking a return control or other return operations under the media content single page display style.

According to the media content stream processing method provided by the embodiment of the present disclosure, after the user inputs the preset interaction operation through the preset interaction region corresponding to the target first media content in the first media content stream, the preset control can be displayed at the target position, so that the user can conveniently switch to displaying the second media content stream with the different display styles by triggering the preset control, thus it is convenient for the user to browse the second media content associated with the target first media content and of which the associated information meets the preset condition. In addition, the input control is displayed in the associated region of the second media content, and it is convenient for the user to quickly post the associated information. When the associated information posted meets certain conditions, the prompt information is displayed, and the different display styles of the second media content may be switched by triggering the second media content, the interaction function based on the media content is enriched, and the browsing of the media content and the interaction effect based on the associated information are improved. For the scene of posting the comments on the media content, when the user browses a certain media content with fewer comments and posts a comment, the preset control may be displayed, to prompt the user to browse more media content with fewer comments by triggering the preset control, and the convenient input control is provided, so that the user can conveniently post comments on the more media content, thereby obtaining the interactive feedback on the posting of the more media content, adding more comments for other users to view, and improving the interaction effect of more users .

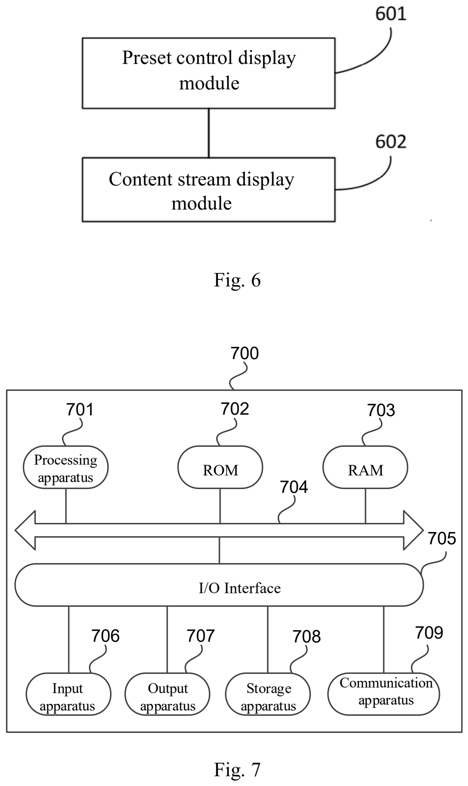

Fig. 6 is a structure schematic diagram of a media content stream processing apparatus provided by an embodiment of the present disclosure. As shown in Fig. 6, the apparatus includes:
a preset control display module 601, configured to: in response to a preset interaction operation for a first preset interaction region, display a preset control on the first preset interaction region, wherein the first preset interaction region includes a preset interaction region corresponding to a target first media content in a first media content stream, and the preset interaction region is configured to display and/or post associated information of media content corresponding to the preset interaction region; and
a content stream display module 602, configured to: in response to a trigger operation for the preset control, display a second media content stream, wherein a second media content in the second media content stream has a preset association relationship with the target first media content, and/or associated information of the second media content meets a first preset condition.

Based on the media content stream processing apparatus in the embodiment of the present disclosure, after the user inputs the preset interaction operation for the preset interaction region corresponding to the target first media content in the first media content stream, the preset control is displayed, so that the user may conveniently switch to the display of the second media content stream in a mode of triggering the preset control, thereby facilitating the user to browse the second media content associated with the target first media content and/or the second media content whose associated information meets the preset condition. The interaction functions based on the media content are enriched, and the browsing effects of the media content are improved.

Optionally, the associated information of the second media content meeting the first preset condition, includes: a number of pieces of the associated information of the second media content is less than a first preset number threshold, and/or a difference between a number of pieces of the associated information of the second media content and a number of pieces of associated information of the target first media content is less than a preset difference threshold.

Optionally, associated information of the target first media content meets a second preset condition.

Optionally, the associated information of the target first media content meeting the second preset condition, includes: a number of pieces of the associated information of the target first media content is less than a second preset number threshold.

Optionally, the preset interaction operation for the first preset interaction region includes: an operation of posting associated information of the target first media content in the first preset interaction region, and/or an interaction operation, which meets a preset requirement, of inputting the associated information of the target first media content in the first preset interaction region.

Optionally, a preset control is displayed at a target position in the first preset interaction region, wherein the target position is associated with associated information in the first preset interaction region.

Optionally, in response to the associated information being present in the first preset interaction region, the target position includes an associated position of a display position of a last piece of the associated information in the first preset interaction region.

Optionally, the apparatus further includes:
a first input control display module, configured to: in a process of displaying the second media content stream, display a first associated information input control corresponding to the second media content in a first associated region of the second media content.

Optionally, the first associated information input control includes an input box and/or at least one emoji control.

Optionally, the apparatus further includes:
an associated information receiving module, configured to: after the displaying a second media content stream, receive target associated information inputted for current second media content.
a prompt information display module, configured to: in response to a posting operation of the target associated information, display preset prompt information when it is determined that the target associated information meets a third preset condition.

Optionally, the target associated information meeting the third preset condition, includes: ordering of the target associated information in associated information of the second media content is a preset sequence number, wherein the preset prompt information is associated with the preset sequence number.

Optionally, a second display style of the second media content stream is different from a first display style of the first media content stream.

Optionally, the second display style of the second media content stream includes at least one of the following: a media content single-page display style; a multi-column and/or multi-row media content display style; and a display style based on a card flow, wherein one card in the card flow corresponds to one piece of second media content, and the card includes an associated image display region of the corresponding second media content, and further includes at least one region selected from the group consisting of an associated character display region of the corresponding second media content, an associated control display region, and an associated information display region.

Optionally, the apparatus further includes:
a style switching module, configured to: in response to the second display style of the second media content stream including the multi-column and/or multi-row media content display style or the display style based on the card stream, after displaying the second media content stream, in response to a trigger operation for target second media content, display the target second media content by using the media content single-page display style.

Optionally, the apparatus further includes:
a second input control display module, configured to: after displaying the target second media content by using the media content single-page display style, in a second associated region of the target second media content, display a second associated information input control corresponding to the target second media content.

Optionally, a second display style of the second media content stream includes at least two types; and
the in response to the trigger operation for the preset control, displaying a second media content stream, includes:
in response to the trigger operation for the preset control, determining a target second display style based on a target determination mode, and displaying the second media content stream by using the target second display style.

Optionally, the target determination mode is associated with a current user and/or the second media content.

Optionally, the second media content in the second media content stream having the preset association relationship with the target first media content, includes: the second media content in the second media content stream corresponds to a same target theme as the target first media content.

Optionally, the preset control contains indication information of the target theme.

Optionally, the second media content in the second media content stream having the preset association relationship with the target first media content, includes: the second media content in the second media content stream has an association relationship with associated information of the target first media content.

The media content stream processing apparatus provided in the embodiment of the present disclosure may execute the media content stream processing method provided in any embodiments of the present disclosure, and has corresponding functional modules and beneficial effects for executing the method.

It is worth noting that various units and modules included in the above apparatus are only divided according to functional logic, but are not limited to the above division, as long as it may achieve the corresponding functions; in addition, the specific name of each functional unit is only for the convenience of mutual distinguishing and is not used to limit the scope of protection of the embodiments of the present disclosure.

Fig. 7 is a structure schematic diagram of an electronic device provided by an embodiment of the present disclosure. Referring to FIG. 7, FIG. 7 illustrates a schematic structural diagram of an electronic device (such as a terminal device or a server in FIG. 7) 700 suitable for implementing some embodiments of the present disclosure. The terminal device in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in FIG. 7 is merely an example, and should not pose any limitation to the functions and the range of use of the embodiments of the present disclosure.

As illustrated in FIG. 7, the electronic device 700 may include a processing apparatus 701 (e.g., a central processing unit, a graphics processing unit, etc.), which can perform various suitable actions and processing according to a program stored in a read-only memory (ROM) 702 or a program loaded from a storage apparatus 708 into a random-access memory (RAM) 703. The RAM 703 further stores various programs and data required for operations of the electronic device 700. The processing apparatus 701, the ROM 702, and the RAM 703 are interconnected by means of a bus 704. An input/output (I/O) interface 705 is also connected to the bus 704.

Usually, the following apparatus may be connected to the I/O interface 705: an input apparatus 706 including, for example, a touch screen, a touch pad, a keyboard, a mouse, a camera, a microphone, an accelerometer, a gyroscope, or the like; an output apparatus 707 including, for example, a liquid crystal display (LCD), a loudspeaker, a vibrator, or the like; a storage apparatus 708 including, for example, a magnetic tape, a hard disk, or the like; and a communication apparatus 709. The communication apparatus 709 may allow the electronic device 700 to be in wireless or wired communication with other devices to exchange data. While FIG. 7 illustrates the electronic device 700 having various apparatuses, it should be understood that not all the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 709 and installed, or may be installed from the storage apparatus 708, or may be installed from the ROM 702. When the computer program is executed by the processing apparatus 701, the above-mentioned functions defined in the methods of some embodiments of the present disclosure are performed.

The names of messages or information exchanged between multiple apparatuses in implementation modes of the present disclosure are only for descriptive purposes and are not intended to limit the scopes of these messages or information.

The electronic device provided in the embodiment of the present disclosure belongs to the same inventive concept as the media content stream processing method provided in the above embodiments. Technical details that are not described in detail in this embodiment may be found in the above embodiments, and this embodiment has the same beneficial effects as the above embodiments.

An embodiment of the present disclosure provides a computer storage medium storing a computer program wherein the computer program, when executed by a computer processor, is configured to implement the media content stream processing method provided in the above embodiments.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: in response to a preset interaction operation for a first preset interaction region, display a preset control on the first preset interaction region, wherein the first preset interaction region includes a preset interaction region corresponding to a target first media content in a first media content stream, and the preset interaction region is configured to display and/or post associated information of media content corresponding to the preset interaction region; and in response to a trigger operation for the preset control, display a second media content stream, wherein second media content in the second media content stream has a preset association relationship with the target first media content, and/or associated information of the second media content meets a first preset condition.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, the preset control display module may also be described as "a module that displays a preset control on a first preset interaction region in response to a preset interaction operation for the first preset interaction region, wherein the first preset interaction region includes a preset interaction region corresponding to a target first media content in a first media content stream, and the preset interaction region is configured to display and/or post associated information of media content corresponding to the preset interaction region".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, a media content stream processing method is provided, and the method includes:
in response to a preset interaction operation for a first preset interaction region, displaying a preset control on the first preset interaction region, wherein the first preset interaction region includes a preset interaction region corresponding to a target first media content in a first media content stream, and the preset interaction region is configured to display and/or post associated information of media content corresponding to the preset interaction region; and
in response to a trigger operation for the preset control, displaying a second media content stream, wherein a second media content in the second media content stream has a preset association relationship with the target first media content, and/or associated information of the second media content meets a first preset condition.

According to one or more embodiments of the present disclosure, the associated information of the second media content meeting the first preset condition, includes: a number of pieces of the associated information of the second media content is less than a first preset number threshold, and/or a difference between a number of pieces of the associated information of the second media content and a number of pieces of associated information of the target first media content is less than a preset difference threshold.

According to one or more embodiments of the present disclosure, associated information of the target first media content meets a second preset condition.

According to one or more embodiments of the present disclosure, the associated information of the target first media content meeting the second preset condition, includes: a number of pieces of the associated information of the target first media content is less than a second preset number threshold.

According to one or more embodiments of the present disclosure, the preset interaction operation for the first preset interaction region includes: an operation of posting associated information of the target first media content in the first preset interaction region, and/or an interaction operation, which meets a preset requirement, of inputting the associated information of the target first media content in the first preset interaction region.

According to one or more embodiments of the present disclosure, the preset control is displayed at a target position in the first preset interaction region, wherein the target position is associated with associated information in the first preset interaction region.

According to one or more embodiments of the present disclosure, in response to the associated information being present in the first preset interaction region, the target position includes an associated position of a display position of a last piece of the associated information in the first preset interaction region.

According to one or more embodiments of the present disclosure, in a process of displaying the second media content stream, the method further includes:
displaying a first associated information input control corresponding to the second media content in a first associated region of the second media content.

According to one or more embodiments of the present disclosure, the first associated information input control includes an input box and/or at least one emoji control.

According to one or more embodiments of the present disclosure, after the displaying a second media content stream, the method further includes:
receiving target associated information inputted for current second media content; and
in response to a posting operation of the target associated information, displaying preset prompt information when it is determined that the target associated information meets a third preset condition.

According to one or more embodiments of the present disclosure, the target associated information meeting the third preset condition, includes: ordering of the target associated information in associated information of the second media content is a preset sequence number, wherein the preset prompt information is associated with the preset sequence number.

According to one or more embodiments of the present disclosure, a second display style of the second media content stream is different from a first display style of the first media content stream.

According to one or more embodiments of the present disclosure, the second display style of the second media content stream includes at least one of the following:
a media content single-page display style;
a multi-column and/or multi-row media content display style; and
a display style based on a card flow, wherein one card in the card flow corresponds to one piece of second media content, and the card includes an associated image display region of the corresponding second media content, and further includes at least one region selected from the group consisting of an associated character display region of the corresponding second media content, an associated control display region, and an associated information display region.

According to one or more embodiments of the present disclosure, in response to the second display style of the second media content stream including the multi-column and/or multi-row media content display style or the display style based on the card stream, after displaying the second media content stream, the method further includes:

in response to a trigger operation for target second media content, displaying the target second media content by using the media content single-page display style, and in a second associated region of the target second media content, displaying a second associated information input control corresponding to the target second media content.

According to one or more embodiments of the present disclosure, a second display style of the second media content stream includes at least two types; and
the in response to the trigger operation for the preset control, displaying a second media content stream, includes:
in response to the trigger operation for the preset control, determining a target second display style based on a target determination mode, and displaying the second media content stream by using the target second display style.

According to one or more embodiments of the present disclosure, the target determination mode is associated with a current user and/or the second media content.

According to one or more embodiments of the present disclosure, the second media content in the second media content stream having the preset association relationship with the target first media content, includes: the second media content in the second media content stream corresponds to a same target theme as the target first media content.

According to one or more embodiments of the present disclosure, the preset control contains indication information of the target theme.

According to one or more embodiments of the present disclosure, the second media content in the second media content stream having the preset association relationship with the target first media content, includes: the second media content in the second media content stream has an association relationship with associated information of the target first media content.

According to one or more embodiments of the present disclosure, a media content stream processing apparatus is provided, and the apparatus includes:
a preset control display module , configured to: in response to a preset interaction operation for a first preset interaction region, display a preset control on the first preset interaction region, wherein the first preset interaction region includes a preset interaction region corresponding to a target first media content in a first media content stream, and the preset interaction region is configured to display and/or post associated information of media content corresponding to the preset interaction region; and
a content stream display module, configured to: in response to a trigger operation for the preset control, display a second media content stream, wherein second media content in the second media content stream has a preset association relationship with the target first media content, and/or associated information of the second media content meets a first preset condition.

According to one or more embodiments of the present disclosure, an electronic device is provided, and the electronic device includes:
one or more processors; and
a memory, configured to store one or more programs,
wherein when the one or more programs are executed by the one or more processors, the media content stream processing method according to any one of claims 1-19 is implemented by the one or more processors.

According to one or more embodiments of the present disclosure, a storage medium containing a computer executable instruction is provided, and the computer executable instruction, when executed by a computer processor, is configured to perform the media content stream processing method provided in the embodiment of the present disclosure.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A media content stream processing method, comprising:
in response to a preset interaction operation for a first preset interaction region, displaying a preset control on the first preset interaction region, wherein the first preset interaction region comprises a preset interaction region corresponding to a target first media content in a first media content stream, and the preset interaction region is configured to display and/or post associated information of media content corresponding to the preset interaction region; and
in response to a trigger operation for the preset control, displaying a second media content stream, wherein second media content in the second media content stream has a preset association relationship with the target first media content, and/or associated information of the second media content meets a first preset condition.

2. The media content stream processing method according to claim 1, wherein the associated information of the second media content meeting the first preset condition, comprises: a number of pieces of the associated information of the second media content is less than a first preset number threshold, and/or a difference between a number of pieces of the associated information of the second media content and a number of pieces of associated information of the target first media content is less than a preset difference threshold.

3. The media content stream processing method according to claim 1 or 2, wherein associated information of the target first media content meets a second preset condition.

4. The media content stream processing method according to claim 3, wherein the associated information of the target first media content meeting the second preset condition, comprises: a number of pieces of the associated information of the target first media content is less than a second preset number threshold.

5. The media content stream processing method according to any one of claims 1-4, wherein the preset interaction operation for the first preset interaction region comprises: an operation of posting associated information of the target first media content in the first preset interaction region, and/or an interaction operation, which meets a preset requirement, of inputting the associated information of the target first media content in the first preset interaction region.

6. The media content stream processing method according to claim 1, wherein the displaying a preset control on the first preset interaction region comprises: displaying a preset control at a target position in the first preset interaction region, wherein the target position is associated with associated information in the first preset interaction region.

7. The media content stream processing method according to claim 6, wherein in response to the associated information being present in the first preset interaction region, the target position comprises an associated position of a display position of a last piece of the associated information in the first preset interaction region.

8. The media content stream processing method according to any one of claims 1-7, wherein the displaying a second media content stream comprises:
displaying a first associated information input control corresponding to the second media content in a first associated region of the second media content.

9. The media content stream processing method according to claim 8, wherein the first associated information input control comprises an input box and/or at least one emoji control.

10. The media content stream processing method according to any one of claims 1-9, wherein, after the displaying a second media content stream, the method further comprises:
receiving target associated information inputted for current second media content; and
in response to a posting operation of the target associated information, displaying preset prompt information when it is determined that the target associated information meets a third preset condition.

11. The media content stream processing method according to claim 10, wherein the target associated information meeting the third preset condition, comprises: ordering of the target associated information in associated information of the second media content is a preset sequence number, wherein the preset prompt information is associated with the preset sequence number.

12. The media content stream processing method according to any one of claims 1-11, wherein a second display style of the second media content stream is different from a first display style of the first media content stream.

13. The media content stream processing method according to any one of claims 1-11, wherein the second display style of the second media content stream comprises at least one of the following:
a media content single-page display style;
a multi-column and/or multi-row media content display style; and
a display style based on a card flow, wherein one card in the card flow corresponds to one piece of second media content, and the card comprises an associated image display region of the corresponding second media content, and further comprises at least one region selected from the group consisting of an associated character display region of the corresponding second media content, an associated control display region, and an associated information display region.

14. The media content stream processing method according to claim 13, wherein, in response to the second display style of the second media content stream comprising the multi-column and/or multi-row media content display style or the display style based on the card stream, after displaying the second media content stream, the method further comprises:
in response to a trigger operation for target second media content, displaying the target second media content by using the media content single-page display style, and in a second associated region of the target second media content, displaying a second associated information input control corresponding to the target second media content.

15. The media content stream processing method according to any one of claims 1-14, wherein a second display style of the second media content stream comprises at least two types; and
the in response to the trigger operation for the preset control, displaying a second media content stream, comprises:
in response to the trigger operation for the preset control, determining a target second display style based on a target determination mode, and displaying the second media content stream by using the target second display style.

16. The media content stream processing method according to claim 15, wherein the target determination mode is associated with a current user and/or the second media content.

17. The media content stream processing method according to any one of claims 1-16, wherein the second media content in the second media content stream having the preset association relationship with the target first media content, comprises: the second media content in the second media content stream corresponds to a same target theme as the target first media content.

18. The media content stream processing method according to claim 17, wherein the preset control contains indication information of the target theme.

19. The media content stream processing method according to any one of claims 1-16, wherein the second media content in the second media content stream having the preset association relationship with the target first media content, comprises: the second media content in the second media content stream has an association relationship with associated information of the target first media content.

20. A media content stream processing apparatus, comprising:
a preset control display module, configured to: in response to a preset interaction operation for a first preset interaction region, display a preset control on the first preset interaction region, wherein the first preset interaction region comprises a preset interaction region corresponding to a target first media content in a first media content stream, and the preset interaction region is configured to display and/or post associated information of corresponding media content; and
a content stream display module, configured to: in response to a trigger operation for the preset control, display a second media content stream, wherein second media content in the second media content stream has a preset association relationship with the target first media content, and/or associated information of the second media content meets a first preset condition.

21. The media content stream processing apparatus according to claim 20, wherein the apparatus comprises: a module for executing the media content stream processing method according to any one of claims 2-19.

22. An electronic device, comprising:
one or more processors; and
a memory, configured to store one or more programs,
wherein when the one or more programs are executed by the one or more processors, the media content stream processing method according to any one of claims 1-19 is implemented by the one or more processors.

23. A storage medium comprising a computer executable instruction, wherein the computer executable instruction, when executed by a computer processor, is configured to perform the media content stream processing method according to any one of claims 1-19.
